# EUROPÄISCHE PATENTANMELDUNG

(11) **EP 2 206 979 A2**
(43) Veröffentlichungstag der Anmeldung: **14.07.2010**
(21) Anmeldenummer: 09179743.1
(22) Anmeldetag: 17.12.2009
(51) Int. Cl.: F24F 5/00

(54) **Vorrichtung und Verfahren zur Raumtemperierung und thermischen Raumkonditionierung**

(30) Priorität: 08.01.2009 DE 102009004353
(71) Anmelder: SCHÜCO International KG, 33609 Bielefeld (DE)
(72) Erfinder: Müller, Dirk, 52066 Aachen (DE)
(74) Vertreter: Dantz, Jan Henning

(57) **Zusammenfassung**

Eine Vorrichtung zur Raumtemperierung und thermischen Raumkonditionierung als Wandelement eines Gebäudes; die folgende Merkmale aufweist: eine Isolierschicht (4); eine in Einbaustellung in einer Gebäudewand relativ zur Isolierschicht zum Rauminneren hin angeordneten Latentwärmespeicherschicht (5); eine Wärmeübertragungseinrichtung (3), die als Fluidkreislauf ausgelegt ist, wobei die Wärmeübertragungseinrichtung (3)einen innen zur Isolierschicht verlaufenden Bereich aufweist, der in die Latentwärmespeicherschicht (5) eingebettet ist oder an diese angrenzt, wobei die Wärmeübertragungseinrichtung (3)ferner einen außen zur Isolierschicht (4) verlaufenden Bereich aufweist, so dass Wärmeenergie aus dem Latentwärmespeicherbereich mit der Wärmeübertragungsbereich durch die Isolierschicht nach außen oder Wärmeenergie von außen durch die Isolierschicht in die Latentwärmespeicherschicht (5) förderbar ist.

## Beschreibung

Die Erfindung betrifft eine Vorrichtung zur Raumtemperierung und thermischen Raumkonditionierung nach dem Oberbegriff des Anspruchs 1. Sie schafft ferner ein Verfahren zum Betrieb einer derartigen Vorrichtung.

Aus dem Stand der Technik ist die Nutzung von Latentwärmespeichern (PCM Phase Change Material) zur Optimierung der Kühlleistung von Wärmetauschern an sich bekannt (z.B. aus der DE 203 14 018). Nach der Lehre dieser Schrift werden zwei Wärmetauscher hintereinander geschaltet, wobei der erste Wärmetauscher mit einem Phasenwechselmaterial PCM versehen ist, um Temperaturspitzen auszugleichen.

Die DE 10 2005 008 536 und die WO 99/24760 schlagen vor, dass zur Kühlung von Räumen ein Wärmetransportmedium gekühlt und anschließend über ein Flächensystem unter Wärmeaufnahme derart geführt wird, dass der Raum und die darin enthaltenen Latentspeicher außerhalb der Nutzungszeit, d. h. vorrangig nachts, direkt über Strahlung und indirekt durch Konvektion über das Fluid Luft ausgekühlt werden, wobei die anfallenden Lasten zum Zeitpunkt ihrer Entstehung (amTag) abgeführt werden und wobei eine Spitzenlastbetrag innerhalb der Nutzungszeit durch den Latentspeicher aufgenommen wird.

Nachteilig bei diesen Konstruktionen ist vor allem der zu große Bedarf an PCM-Flächen bzw. PCM-Massen für die Kühlleistung und der Anlagenbedarf bei zentralen wie auch dezentralen Konditionierungsgeräten.

Die Erfindung hat die Aufgabe, die Probleme zu verringern.

Die Erfindung schafft eine Vorrichtung zur Raumtemperierung und thermischen Raumkonditionierung als Wandelement eines Gebäudes, die folgende Merkmale aufweist: eine Isolierschicht; eine in Einbaustellung in einer Gebäudewand relativ zur Isolierschicht zum Rauminneren hin angeordnete Latentwärmespeicherschicht und eine Wärmeübertragungseinheit, die als Fluidkreislauf ausgelegt ist, und die einen innen zur Isolierschicht verlaufenden Bereich aufweist, der in die Latentwärmespeicherschicht eingebettet ist oder an diese angrenzt; und einen außen zur Isolierschicht verlaufenden Bereich, so dass Wärmeenergie aus dem Latentwärmespeicherbereich mit der Wärmeübertragungsbereich durch die Isolierschicht nach außen oder Wärmeenergie von außen durch die Isolierschicht in die Latentwärmespeicherschicht förderbar ist.

Vorzugsweise ist die Wärmeübertragungseinrichtung als Fluidkreislauf mit einer Umwälzpumpe ausgelegt, mit dem ein Fluid - vorzugsweise eine Flüssigkeit - aus der Latentwärmespeicherschicht in eine äußere Luftschicht und von dort zurück in die Latentwärmespeicherschicht leitbar ist.

Erfindungsgemäß erfolgt in besonders einfacher Weise ein Austausch von Wärmeenergie zwischen Gebäudeinnen- und Außenbereich über die Wärmeübertragungseinheit.

Die Erfindung schafft eine Vorrichtung, die als ein kompaktes plattenartiges Bauelement ausgelegt werden kann, das hervorragend als ein Flächenelement einer Fassadenkonstruktion verwendbar ist.

Die Vorrichtung eignet sich insbesondere auch zur ergänzenden Leistungssteigerung von Lüftungsanlagen zur Temperierung von Räumen/Gebäuden, denn mit der Vorrichtung lässt sich ergänzend Wärme aus dem Gebäudeinneren abführen.

Dabei wird die Wärmeübertragungseinheit vorzugsweise als Wärmetauscher ausgelegt. Derart erfolgt in einfacher Weise ein Austausch von Wärme zwischen dem Gebäudeinnenbereich und dem Gebäudeaußenbereich über die Wärmeübertragungseinheit.

Die Erfindung schafft auch ein Verfahren zum Betreiben einer Vorrichtung zur Raumtemperierung und thermischen Raumkonditionierung nach einem der vorstehenden Ansprüche, bei dem im Fall eines zu einem warmen Rauminneren zunächst Wärmeenergie aus dem Rauminneren in der Latentwärmespeicherschicht gespeichert wird, die vorzugsweise zeitlich versetzt später aus der Latentwärmespeicherschicht mit der Wärmeübertragungseinheit durch die Isolierschicht nach außen gefördert und dort an die Luft abgegeben wird, und/oder dass im Fall eines zu kaltem Rauminneren Wärmeenergie mit der Wärmeübertragungseinheit von außen durch die Isolierschicht in die Latentwärmespeicherschicht gefördert wird.

Vorzugsweise erfolgt das Abtransportieren von Wärmeenergie aus der Latentwärmespeicherschicht nachts.

Vorteilhafte Ausgestaltungen der Erfindung sind den Unteransprüchen zu entnehmen.

Nachfolgend wird die Erfindung unter Bezug auf die Zeichnung anhand eines Ausführungsbeispiels näher beschrieben. Es zeigt:

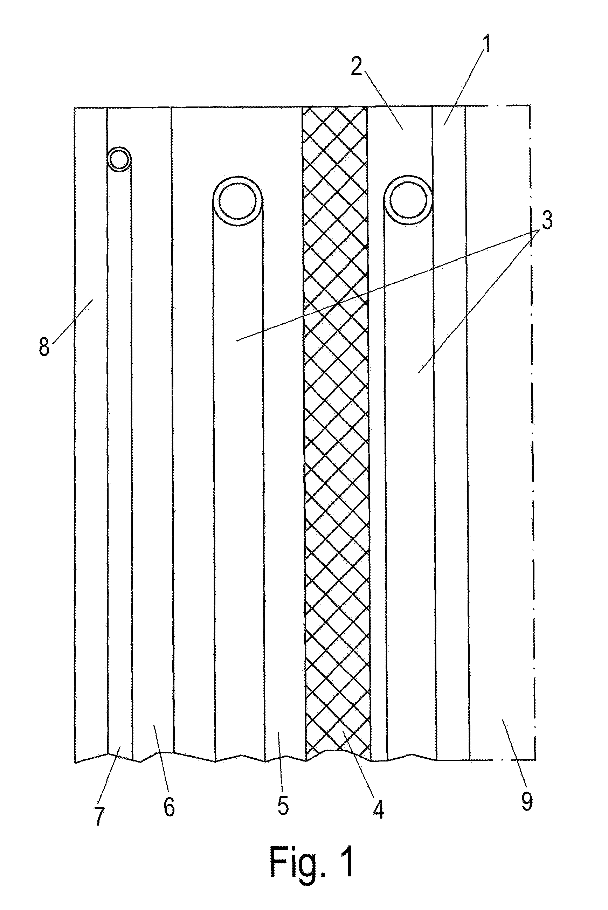

Fig. 1 einen Schnitt durch einen Abschnitt einer erfindungsgemäßen Vorrichtung.

Fig. 1 zeigt eine Vorrichtung zur Raumtemperierung und thermischen Raumkonditionierung, die beispielsweise in einen (hier nicht dargestellten) umlaufenden Blendrahmen eingesetzt werden kann, der einen Teil einer Fassade bzw. der Außenwand eines Gebäudes bildet.

In der Einbaustellung der Vorrichtung in einer Gebäudewand liegt das Rauminnere links der Anordnung der Fig. 1.

Die Vorrichtung 1 weist von außen nach innen (also nach Fig. 1 von rechts nach links nach einer besonders vorteilhaften Ausgestaltung folgende Schichten auf:
- eine äußere Abdeckung 1, die optional mit einer äußeren Beschichtung, z.B. mit einer transparenten Wärmedämmung 9 (TWD) versehen sein kann,
- eine sich innen an die Abdeckung 1 anschließende optionale Luftschicht 2
- eine sich innen an die Luftschicht 2 anschließende Isolierschicht 4,
- eine sich innen an die Isolierschicht anschließende Latentwärmespeicherschicht 5, die vorzugsweise aus einem Phasenwechselmaterial - kurz PCM - besteht oder ein solches aufweist,
- eine sich innen an die Latentwärmespeicherschicht 5 anschließende optionale Luftschicht 6; und
- eine sich innen an die innere Luftschicht 6 anschließende innere Abdeckung 8.

Mit dem Bezugszeichen 3 ist eine Wärmeübertragungseinheit bezeichnet, die als Fluidkreislauf mit einer hier nicht dargestellten Pumpe ausgelegt ist, mit dem ein Fluid - vorzugsweise eine Flüssigkeit - aus der Latentwärmespeicherschicht 5 in die äußere Luftschicht 2 und von dort zurück in die innere Latentwärmespeicherschicht 5 geleitet werden kann.

Die äußere Abdeckung 1 dient zum Schutz vor Umwelteinflüssen, zur räumlichen Begrenzung der Baueinheit und zur optischen Verkleidung. Sie dient zudem der besseren Temperaturübertragung (Temperaturübertragung durch größere Strahlflächen).

Die Wärmeübertragungseinheit 3 ist mit der äußeren Abdeckung 1 vorzugsweise direkt (Körperschluss) oder über Verbindungsstege indirekt verbunden.

Die Isolierschicht 4 besteht vorzugsweise aus hochisolierenden Stoffen und Aufbauten wie z. B. Vakuumisolationspaneelen (VIP), EPS oder Kunststoffprofilen mit gefüllten Hohlkammern.

Der innere Bereich der Wärmeübertragungseinheit 3 ist in die Latentwärmespeicherschicht 5 gebettet, welche sie auch durchsetzt. Ihr äußerer Bereich ragt in die äußere (relativ zur Isolierschicht 4) Luftschicht 2.

Den Abschluss zur Rauminnenseite bildet die innere Abdeckung 8, welche hier optional mit einem Wärmetauscher 7 oder einer Flächenheizung zur Raumtemperierung versehen ist.

Optional ist zwischen den einzelnen Ebenen jeweils die geschlossene Luftschicht 2, 4 ausgebildet, um die Konvektions- und Dämmeigenschaften der Vorrichtung zu verbessern.

Der Aufbau der Vorrichtung/des Bauelementes ist so kompakt, dass er vorzugsweise der Bautiefe eines Blendrahmens entspricht und so einfach in eine Fassadenkonstruktion eingesetzt werden kann, wobei die Wärmedämmung zumindest der einer massiven Gebäudewand moderner Bauart entspricht.

Die Vorrichtung wird als vorgefertigtes Bauteil in die entsprechende Gebäude- bzw. Fassadenöffnung eingesetzt.

Derart sind folgende vorteilhafte Betriebsweisen realisierbar.

Sommer (Tagsüber; d.h. es liegen eine hohe Raum- und eine hohe Außentemperatur vor):

Das in die Wand integrierte Phasenwechselmaterial PCM der Latentwärmespeicherschicht 5 nimmt Wärme hauptsächlich von der Innenraumseite auf und puffert die Spitzenlast der Temperaturen über den Tagesverlauf, d.h. der PCM-Speicher - die Latentwärmespeicherschicht 5 - lädt sich auf.

Nach außen ist das PCM der Latentwärmespeicherschicht 5 durch die Dämm- bzw. Isolierschicht 4 geschützt, d.h., es findet kein Temperatur-Austausch in der äußeren Wärmeübertragungseinheit 3 oder nach außen statt.

Die Latentwärmespeicherschicht 5 und die Isolierschicht 4 dienen als optimale Wärmedämmung gegen ein Aufheizen des Gebäudeinneren.

Die Wärmeübertragungseinheit 3 kann optional über einen weiteren zusätzlichen Wärmetauscher oder einen zusätzlichen externen PCM-Speicher den PCM-Speicher tagsüber entladen und somit die Leistungsfähigkeit tagsüber optimieren.

Sommer (nachts, d.h., die Außentemperatur ist gesunken):
Die Latentwärmespeicherschicht 5 ist vom Tagesbetriebs her mit Wärmenergie aufgeladen und gibt seine Energie während der Nachtabkühlung/nachts über die Wärmeübertragungseinheit 3 in die Luftschicht 2 bzw. nach außen hin an die Umgebungsluft ab.
Die Wärmeübertragungseinheit 3 unterstützt damit die kontrollierte und vollständige Entladung des PCM-Latentwärmespeichers 5 während der Nacht. Nach dieser Entladung kann er während des Tages wieder Wärmeenergie speichern bzw. Temperaturlasten aufnehmen.

### Winter:

Im Winter dient der gesamte Aufbau als Wärmedämmung und entspricht einer wärmegedämmten massiven Wand. Der optionale innere Wärmetauscher 7 dient als Wandheizung, wobei die Wandheizung gleichzeitig das PCM erwärmt und so die Wärmedämmleistung der Wand erhöht.

Optional kann die Außenseite mit der TWD-Schicht 9 (transparente Wärmedämmung) versehen sein, um im Winter über die äußere Wärmeübertragungseinheit 3 Wärme in den Bereich innen zur Wärmedämmung zu transportieren, wodurch die Latentwärmespeicherschicht 5 aufgeladen wird.

Zwischen der inneren und äußeren Abdeckung 1, 8 können zusätzlich Geräte zur Raumkonditionierung und Belüftung eingebaut werden, die den Prozess der Klimatisierung unterstützen.

Die Steuerung der Vorrichtung erfolgt vorzugsweise mittels einer entsprechend programmierten - hier nicht dargestellten - Steuerungsvorrichtung, welche mit einer Steuerungs- oder Regelungsprogramm versehen ist.

### Bezugszeichen

- 1: äußere Abdeckung
- 2: Luftschicht
- 3: Wärmeübertragungseinheit innen/außen
- 4: Isolierung (VIP)
- 5: PCM
- 6: Luftschicht
- 7: Wärmetauscher Innentemperierung
- 8: Innere Abdeckung
- 9: TWD

## Patentansprüche

1. Vorrichtung zur Raumtemperierung und thermischen Raumkonditionierung als Wandelement eines Gebäudes; die folgende Merkmale aufweist:
a. eine Isolierschicht (4);
b. eine in Einbaustellung in einer Gebäudewand relativ zur Isolierschicht zum Rauminneren hin angeordneten Latentwärmespeicherschicht (5);
c. eine Wärmeübertragungseinrichtung (3), die als Fluidkreislauf ausgelegt ist,
d. wobei die Wärmeübertragungseinrichtung (3)einen innen zur Isolierschicht verlaufenden Bereich aufweist, der in die Latentwärmespeicherschicht (5) eingebettet ist oder an diese angrenzt,
e. wobei die Wärmeübertragungseinrichtung (3)ferner einen außen zur Isolierschicht (4) verlaufenden Bereich aufweist,
f. so dass Wärmeenergie aus dem Latentwärmespeicherbereich mit der Wärmeübertragungsbereich durch die Isolierschicht nach außen oder Wärmeenergie von außen durch die Isolierschicht in die Latentwärmespeicherschicht (5) förderbar ist.

2. Vorrichtung nach Anspruch 1, **dadurch gekennzeichnet, dass** die Wärmeübertragungseinrichtung als Fluidkreislauf mit einer Umwälzpumpe ausgelegt ist, mit dem ein Fluid - vorzugsweise eine Flüssigkeit - aus der Latentwärmespeicherschicht (5) in eine äußere Luftschicht (2) und von dort zurück in die Latentwärmespeicherschicht (5) leitbar ist.

3. Vorrichtung nach Anspruch 1 oder 2, **dadurch gekennzeichnet, dass** die Wärmeübertragungseinheit als Wärmetauscher ausgelegt ist.

4. Vorrichtung nach Anspruch 2 oder 3, **dadurch gekennzeichnet, dass** sie eine äußere Abdeckung (1) aufweist.

5. Vorrichtung nach einem der vorstehenden Ansprüche, **dadurch gekennzeichnet, dass** die äußere Abdeckung (1) mit einer Wärmedämmung, vorzugsweise einer transparenten Wärmebeschichtung (9) versehen ist.

6. Vorrichtung nach einem der vorstehenden Ansprüche, **dadurch gekennzeichnet, dass** zwischen der äußeren Abdeckung (1) und der Isolierschicht (4) eine Luftschicht (2) ausgebildet ist, in welcher der äußere Bereich der Wärmeübertragungseinheit ausgebildet ist

7. Vorrichtung nach einem der vorstehenden Ansprüche, **dadurch gekennzeichnet, dass** sie eine innere Abdeckung (8) aufweist.

8. Vorrichtung nach einem der vorstehenden Ansprüche, **dadurch gekennzeichnet, dass** zwischen der inneren Abdeckung (8) und der Latentwärmespeicherschicht (5) eine innere Luftschicht (6) ausgebildet ist.

9. Vorrichtung nach einem der vorstehenden Ansprüche, **dadurch gekennzeichnet, dass** zwischen der inneren Abdeckung (8) und der Latentwärmespeicherschicht (5) in der inneren Luftschicht (6) ein Wärmetauscher (7) angeordnet ist.

10. Vorrichtung nach einem der vorstehenden Ansprüche, **dadurch gekennzeichnet, dass** sie wenigstens einen weiteren Latentwärmespeicher aufweist, der über einen Wärmetauscher mit der Latentwärmespeicherschicht (5) verbunden ist.

11. Vorrichtung nach einem der vorstehenden Ansprüche, **dadurch gekennzeichnet, dass** die äußere und die innere Abdeckung bereichsweise über Lüftungsmodule miteinander verbunden sind.

12. Vorrichtung nach einem der vorstehenden Ansprüche, **dadurch gekennzeichnet, dass** die Isolierschicht (4) aus VIP besteht.

13. Verfahren zum Betreiben einer Vorrichtung zur Raumtemperierung und thermischen Raumkonditionierung nach einem der vorstehenden Ansprüche, **dadurch gekennzeichnet, dass**
a. im Fall eines zu einem warmen Rauminneren zunächst Wärmeenergie aus dem Rauminneren in der Latentwärmespeicherschicht (5) gespeichert wird, die vorzugsweise zeitlich versetzt später aus der Latentwärmespeicherschicht (5) mit der Wärmeübertragungseinheit (3)durch die Isolierschicht nach außen gefördert und dort an die Luft abgegeben wird, und/oder
b. dass im Fall eines zu kaltem Rauminneren Wärmeenergie mit der Wärmeübertragungseinheit (3)von außen durch die Isolierschicht in die Latentwärmespeicherschicht (5) gefördert wird.

14. Verfahren nach Anspruch 13, **dadurch gekennzeichnet, dass** im Schritt a. das Abtransportieren von Wärmeenergie aus der Latentwärmespeicherschicht (5) nachts erfolgt.
